# EUROPÄISCHE PATENTSCHRIFT

(11) **EP 3 197 585 B1**
(45) Veröffentlichungstag und Bekanntmachung des Hinweises auf die Patenterteilung: **06.03.2019**
(21) Anmeldenummer: 15770795.1
(22) Anmeldetag: 17.09.2015
(51) Int. Cl.: B01D 46/24, B01D 39/20

(54) **FILTERKERZE MIT MINERALISCHEM ZUSATZSTOFF**
FILTER CANDLE WITH MINERAL ADDITIVE
BOUGIE FILTRANTE À ADDITIFS MINÉRAUX

(30) Priorität: 24.09.2014 DE 102014014164
(43) Veröffentlichungstag der Anmeldung: 02.08.2017
(73) Patentinhaber: BWF Tec GmbH & Co. KG, 89362 Offingen (DE)
(72) Erfinder: CARIUS, Thomas, 89518 Heidenheim (DE); DUNKEL, Martin, 89312 Günzburg (DE); IMMINGER, Hans-Joerg, 89362 Offingen (DE)
(74) Vertreter: Bosch Jehle Patentanwaltsgesellschaft mbH
(86) Internationale Anmeldenummer: PCT/EP2015/001868
(87) Internationale Veröffentlichungsnummer: WO 2016/045780

(56) Entgegenhaltungen:
- WO-A1-2007/049051
- DE-T2- 60 319 212
- US-A1- 2006 090 651

## Beschreibung

Gegenstand der Erfindung ist ein Filterkerzenelement zur Entstaubung industrieller Gase und ein Verfahren zur Herstellung eines solchen Filterkerzenelements. Insbesondere betrifft die Erfindung ein Filterkerzenelement, das verbesserte Stabilitäts- und Umweltverträglichkeitseigenschaften aufweist.

Bei der Entstaubung industrieller Gase kommen einerseits Schlauchfilter und andererseits Filterkerzen zum Einsatz. Bei textilen Schlauchfiltern ist das Filterelement in der Regel ein zylindrischer Schlauch, der ein Stützgewebe mit darauf aufgebrachten Fasern als Filtermaterial umfasst. Schlauchfilter werden zur Filtration bei niedrigen und mittleren Temperaturen bis etwa 250 °C eingesetzt. Im Gegensatz dazu können Filterkerzen mit einem Filterkörper aus anorganischen Fasern (wie etwa Keramikfasern, glasigen Fasern, Hochtemperaturwollen, Kohlenstofffasern) zur Filtration von Gasen bis zu 1 000 °C eingesetzt werden. Die Staubpartikeln des Rohgases werden dabei überwiegend an der Oberfläche der Filterkerze abgeschieden.

Filterkerzen zur industriellen Entstaubung werden in zahlreichen Gebieten der Industrie eingesetzt. So generieren etwa die Zement-, Glas- und chemische Industrie schwefel- oder chlorhaltige Gase sowie Feinstaub, der durch den Einsatz von Filterkerzenelementen effektiv filtriert werden kann.

WO 2007/049051 A1 offenbart ein keramisches Filterelement das organische Fasern aufweist und dessen Zähigkeit durch das Hinzufügen von anorganischen Garnen erhöht wurde. Das keramische Filterelement wurde aus kolloidalem SiO₂ hergestellt, das mit Stärke vermischt ist. DE 603 19 212 T2 offenbart ein Filterelement aus anorganischen Fasern und Aktivkohle. US 2006/0090651 A1 befasst sich mit der Trennung von Gasen, es befasst sich nicht mit Filtern für die industrielle Entstaubung von Gasen.

Sowohl während der Transport- und Einbauphase als auch während der Betriebsphase können Filterkerzenelemente Druckbelastungen insbesondere in radialer Richtung und Biegemomenten insbesondere in Längsrichtung ausgesetzt sein. Besonders anfällig für die genannten Belastungen sind Filterkerzenelemente während des Zeitraums des Transports und des Einbaus in die Filteranlage. Die Filterkerzenelemente können dann beispielsweise durch Erschütterungen, Stöße oder Vibrationen beschädigt und unter Umständen sogar unbrauchbar gemacht werden.

Darüber hinaus erfordern es strengere und schärfere Umweltschutzvorgaben, einerseits umweltverträgliche Rohstoffe bei der Herstellung der Filterkerzenelemente zu verwenden, und andererseits die Filtrationseigenschaften der eingesetzten Filterkerzenelemente zu verbessern.

Es ist bekannt, dass die Umweltschutzvorgaben teilweise dadurch realisiert werden können, dass die Länge der Filterkerzenelemente vergrößert wird. Dadurch kann deren Durchsatzleistung erhöht werden. Dies wirkt sich jedoch nachteilig auf die Stabilitätseigenschaften aus, da das Gewicht der Filterkerzenelemente und damit die Zugspannungen, die während der Betriebsphase aufgrund des Eigengewichts auf ihnen lasten, zunehmen. Des Weiteren kann die Oberfläche von bekannten Filterkerzenelementen nachträglich mit katalytisch aktiven Metallsalzlösungen imprägniert werden. Dies ermöglicht zusätzlich zu der Entstaubung auch die Entstickung der Gase. Die verwendeten bekannten Katalysatoren (wie etwa Vanadiumpentoxid) sind jedoch toxisch und wenig umweltverträglich.

Aufgabe der vorliegenden Erfindung ist es, die Stabilität eines Filterkerzenelements auf umweltverträgliche Weise zu erhöhen, ohne dabei die Filtrationsleistung zu beeinträchtigen.

Diese Aufgabe wird durch das Filterkerzenelement mit den Merkmalen gemäß Anspruch 1 gelöst. Vorteilhafte Ausgestaltungen der vorliegenden Erfindung sind in den Unteransprüchen bis 6 angegeben. Das Verfahren zur Herstellung des erfindungsgemäßen Filterkerzenelements ist in Anspruch 7 dargelegt. Vorteilhafte Ausgestaltungen des erfindungsgemäßen Verfahrens sind in den Unteransprüchen 8 und 9 angegeben.

Das erfindungsgemäße Filterkerzenelement zur Entstaubung industrieller Gase umfasst einen Filterkörper, der aus anorganischen Fasern aufgebaut ist, und einen mineralischen Zusatzstoff, der an die anorganischen Fasern angelagert ist. Dadurch, dass der mineralische Zusatzstoff an die anorganischen Fasern angelagert ist, werden die Festigkeit und Druckstabilität des Filterkörpers erhöht. Insbesondere werden dadurch die radiale Druckstabilität und das Biegemoment in Längsrichtung erhöht. Die Verwendung eines mineralischen Zusatzstoffes hat den Vorteil einer erhöhten Umweltverträglichkeit des Filterkerzenelements. Vorzugsweise kommen als anorganische Fasern mineralische Fasern, Hochtemperaturwollen, glasige Fasern, AES-Fasern oder Kohlenstofffasern zum Einsatz. Als mineralischer Zusatzstoff wird Zeolith werwendet. Offenbart wird als mineralischer Zusatzstoff Quarzsand, Gesteinsmehl, oder Kalk. Bei den vorangenannten Stoffen handelt es sich um umweltverträgliche und gesundheitlich unbedenkliche Rohstoffe. Dies hat den Vorteil, dass der Umgang mit dem Filterkerzenelement für den Menschen unbedenklich ist. Ein weiterer Vorteil besteht in der einfachen Entsorgung des Filterkerzenelements.

Vorteilhafterweise sind die anorganischen Fasern in einer Fasermatrix angeordnet. Die Anordnung der Fasern zu einer dreidimensionalen Matrix erzeugt eine poröse Struktur des Filterkörpers. Aufgrund dieser Struktur werden einerseits Staubpartikeln im Filterkörper zurückgehalten, andererseits kann das entstaubte Gas die Fasermatrix des Filterkerzenelements durchdringen und abgesaugt werden. Weiter erhöht die Anordnung der Fasern zu einer Fasermatrix sowohl die mechanische Stabilität als auch die thermische Beständigkeit des Filterkerzenelements. Es ist weiter von Vorteil, wenn der mineralische Zusatzstoff gleichmäßig in der Fasermatrix verteilt ist. Damit wird zum einen die Stabilität des Filterkerzenelements erhöht, indem der mineralische Zusatzstoff an die Fasern der Fasermatrix angelagert ist. Zum anderen kann ein Teil der Hohlräume der Fasermatrix aufgefüllt werden, was zusätzlich zu einer Versteifung des Filterkörpers beiträgt.

Zweckmäßigerweise weist der mineralische Zusatzstoff ein Gewicht auf, das 1 % bis 8 % des Gewichts des Filterkörpers, vorzugsweise 2 % bis 6 % des Gewichts des Filterkörpers ausmacht. Die Begrenzung der Zuschlagsmenge des mineralischen Zusatzstoffes hat einerseits den Vorteil, dass sowohl das Biegemoment des Filterkörpers in Längsrichtung als auch die radiale Druckstabilität des Filterkörpers signifikant erhöht sind. Andererseits wird durch die Begrenzung der Zuschlagsmenge des mineralischen Zusatzstoffes verhindert, dass die Porosität und die Luftdurchlässigkeit des Filterkörpers (sog. Filterwiderstand) deutlich reduziert werden. Damit wird ein erhöhter Druckverlust beim Durchgang des Gases durch das Filterkerzenelement (sog. Druckverlust- oder Δp-Verhalten) vermieden. Der mineralische Zusatzstoff wirkt sich also noch nicht merklich auf das Differenzdruckverhalten im Filterprozess aus. Vorzugsweise beträgt die Porosität des Filterkerzenelements mindestens 80 %. Oberhalb dieses Wertes wirkt sich besagter Druckverlust nicht signifikant auf die Filtrationseigenschaften des Filterkerzenelements aus. Ein weiterer Vorteil der Begrenzung der Zuschlagsmenge des mineralischen Zusatzstoffes besteht darin, dass die Gewichtszunahme des Filterkerzenelements aufgrund des angelagerten Zusatzstoffes begrenzt ist. Damit ist gewährleistet, dass der Vorteil der stabilisierenden Wirkung des an die anorganischen Fasern angelagerten Zusatzstoffes den Nachteil der zusätzlichen Gewichtsbelastung überwiegt.

Nach der Erfindung umfasst der mineralische Zusatzstoff Zeolith. Zeolith weist eine hohe strukturelle chemische Ähnlichkeit mit den anorganischen Fasern auf. Dadurch wird eine wechselseitige Affinität begründet. Daher lagert sich Zeolith besonders gleichmäßig an die anorganischen Fasern an. Es findet eine praktisch vollständige Bindung des Zeolithen an die Fasermatrix statt. Ein weiterer Vorteil von Zeolith beruht auf seiner chemischen und thermischen Stabilität, die mit der der anorganischen Fasern vergleichbar ist. Dadurch ist Zeolith auch unter Betriebsbedingungen chemisch und thermisch stabil und verbleibt unverändert im Filterkörper. Ein zusätzlicher Vorteil von Zeolith besteht darin, dass es sich dabei um einen Stoff mit eng spezifizierter und reproduzierbar verfügbarer Dimensionierung und Charakteristik handelt.

Vorzugsweise ist der Zeolith ausgewählt aus Zeolithen vom Beta-(BEA-)Typ, Pentasil-(MFI-)Typ, Mordenit-(MOR-)Typ, LiLSX-(FAU-)Typ, Chabasit-(CHA-)Typ, Erionit-(ERI-)Typ, Linde-Type-L-(LTL-)Typ, Brewsterit-(BRE-)Typ.

Gemäß einem weiteren Aspekt der Erfindung ist der Zeolith mit einer katalytisch aktiven Komponente dotiert. Vorzugsweise umfasst die katalytisch aktive Komponente ein katalytisch aktives Metall oder eine katalytisch aktive Edelmetall- oder Metallverbindung, bevorzugt Eisen, Kobalt oder Kupfer.

Die in der Industrie entstehenden Gase können Temperaturen bis zu 1 000 °C aufweisen. Zahlreiche industrielle Anwendungen mit hohen Prozesstemperaturen, wie sie etwa in Schmelz-, Feuerungs- und Kalzinierungsanlagen auftreten, generieren zusätzlich häufig hohe Konzentrationen von Stickoxiden (NOₓ) im Rauch- bzw. Abgas. Es ist bekannt, dass die NOₓ-Reduktion (Entstickung) durch eine sog. selektive katalytische Reduktionsreaktion ("selective catalytic reduction", SCR) erfolgen kann. Bei dieser Reaktion werden die Stickoxide unter Einsatz von Ammoniak (NH₃) oder Harnstoff (Urea, CH₄N₂O) unter Anwesenheit eines Katalysators zu molekularem Stickstoff (N₂) und Wasser (H₂O) umgesetzt. Die Geschwindigkeit der Reduktionsreaktion hängt bei einem vorgegebenen Katalysator von dem Verhältnis NO₂ zu NOₓ ab. Bei der sog. schnellen SCR ("fast-SCR") sind NO₂ und NO zu gleichen Teilen im Gas vorhanden. Es ist bekannt, dass Filterkerzenelemente nachträglich mit Metallsalzlösungen imprägniert werden, die eine katalytisch aktive Komponente enthalten. Als katalytisch aktive Komponenten haben sich vor allem Vandadiumpentoxid (V₂O₅), Wolframoxid (WO₃) und Titandioxid (TiO₂) (sog. VWT-Katalysatoren) etabliert. Ein Nachteil der vorangenannten Katalysatoren ist ihre Giftigkeit und ihre schlechte Umweltverträglichkeit. Weiter ist an den vorangenannten bekannten Katalysatoren nachteilig, dass ihre katalytische Aktivität bei Temperaturen über 500 °C sinkt.

Zeolithe weisen Poren-, Käfig- und Kanalstrukturen auf. In diesen Strukturen können katalytisch aktive Komponenten eingelagert und festgehalten werden. Die katalytisch aktiven Komponenten sind dann im Filterkörper immobilisiert. Der Einsatz einer katalytisch aktiven Komponente in Zeolith hat den Vorteil, dass die besagte Reduktionsreaktion beschleunigt wird. Beim Einsatz von Zeolith mit katalytisch aktiver Komponente als Katalysator bei der SCR-Reaktion wird Stickstoffmonoxid (NO) zunächst zu Stickstoffdioxid (NO₂) oxidiert. Dadurch kann das die Geschwindigkeit der anschließenden Reduktionsreaktion bestimmende Verhältnis NO₂ zu NOₓ begünstigt werden. Des Weiteren können mit katalytisch aktiven Komponenten dotierte Zeolithe aufgrund ihrer chemischen und thermischen Stabilität auch bei hohen Betriebstemperaturen eingesetzt werden. Weiter ist von Vorteil, dass die Zeolithe mit eingelagerten katalytischen Komponenten umweltverträglich und ungiftig sind.

Das erfindungsgemäße Verfahren zur Herstellung des oben beschriebenen Filterkerzenelements zur Entstaubung industrieller Gase umfasst folgende Schritte: Herstellung einer Slurry, die anorganische Fasern, vorzugsweise mineralische Fasern, Hochtemperaturwollen, glasige Fasern, AES-Fasern oder Kohlenstofffasern, und einen mineralischen Zusatzstoff, wobei der mineralische Zusatzstoff Zeolith umfasst. Weiterhin: Ansaugen der Slurry auf einen Saugkern zur Formung des Filterkerzenelements; Trocknung des geformten Filterkerzenelements.

Dadurch, dass die Slurry neben den anorgansichen Fasern einen mineralischen Zusatzstoff umfasst, werden die Festigkeit und Druckstabilität des Filterkörpers erhöht. Insbesondere werden dessen radiale Druckstabilität und dessen Biegemoment in Längsrichtung erhöht.

Dies liegt daran, dass sich der mineralische Zusatzstoff gleichmäßig an die anorganischen Fasern im Wasserbad anlagert. Dadurch wird die Fasermatrix versteift.

Vorteilhafterweise umfasst die Herstellung der Slurry folgende Schritte: Dispersion der anorganischen Fasern und des mineralischen Zusatzstoffes in Pulverform in einem Wasserbad; Umwälzen der Slurry. Zweckmäßigerweise macht das Gewicht der anorganischen Fasern und des mineralischen Zusatzstoffes insgesamt etwa zwischen 1 % und 5 % des Gesamtgewichts der Slurry aus. Außerdem ist es zweckmäßig, der Slurry Stärke und/oder Kieselsol beizumengen. Dadurch wird einerseits eine verbesserte Benetzung der Fasern bewirkt. Andererseits kann dadurch die Viskosität der Slurry eingestellt werden. Dadurch, dass die Slurry beispielsweise mittels geeigneter Pumpen stetig umgewälzt wird, werden Fasern und Zusatzstoff in der Schwebe gehalten bzw. am Sedimentieren gehindert.

Der Saugkern wird zur Formung des Filterkerzenelements verwendet. Zweckmäßigerweise umfasst dieser Saugkern eine Metallrahmenkonstruktion. Vorzugsweise weist die Metallrahmenkonstruktion eine zylindrisch geformte poröse Ummantelung, beispielsweise aus Lochblech, auf. Die Metallrahmenkonstruktion bildet exakt die spätere Innengeometrie des herzustellenden Filterkerzenelements ab. An den Saugkern wird ein Unterdruck angelegt. Anschließend wird er langsam in das Wasserbad eingetaucht. Im Wasserbad wird durch den Unterdruck die Slurry angesaugt. Dadurch lagern sich die enthaltenen Fasern samt angelagertem Zusatzstoff auf dem Saugkern ab und bilden einen Filterkörper mit angelagertem mineralischem Zusatzstoff. Das Wasser wird zweckmäßigerweise durch die poröse Ummantelung abgesaugt und abgeschieden. Auf der Filterschicht lagern sich weitere Fasern aus der Slurry ab, solange der Unterdruck eine Durchströmung des entstehenden Filterkörpers erlaubt. Dadurch wird eine dreidimensionale Fasermatrix aufgebaut. Über die Einstellung der Ansaugzeit und des Unterdruckes kann die Wandstärke des Filterkörpers eingestellt werden. Die durchgesaugte Wassermenge kann auch als Indikator für die erzielte Fasermasse in dem Filterkörper dienen.

Zweckmäßigerweise wird das Filterkerzenelement nach der Formung der gewünschten Faserschicht unter Unterdruck aus dem Bad entnommen. Dabei wird das Filterkerzenelement teilweise entwässert und zur Trocknung in ein Trocknungswerkzeug überführt.

Das mineralische Zusatzstoff umfasst Zeolith. Zeolithe lassen sich im Wasserbad sehr gut dosieren und auch dispergieren. Des Weiteren lagern sie sich überaus gleichmäßig an die anorganischen Fasern im Wasserbad an. Außerdem wird ein Teil der Hohlräume in der Fasermatrix aufgefüllt. Dies trägt zusätzlich zu einer Versteifung des Filterkörpers bei. Zweckmäßigerweise wurde der Zeolith vor der Herstellung der Slurry mit einer katalytisch aktiven Komponente dotiert. Dadurch, dass der Slurry Zeolith beigemengt wird, der mit einer katalytisch aktiven Komponente dotiert worden ist, erfolgt der Eintrag des Katalysators in einem Arbeitsgang mit dem Herstellungsprozess des Filterkerzenelements. Dies ist ein Vorteil gegenüber bekannten Verfahren, wie beispielsweise der nachträglichen Imprägnierung des Filterkerzenelements mit einem Katalysator. Neben den oben beschriebenen Vorteilen, die der Einsatz eines mit einer katalytisch aktiven Komponente dotierten Zeolithen mit sich bringt, bewirkt die Dispersion des Zeolithen im Wasserbad, dass die katalytisch aktive Komponente überaus gleichmäßig im Filterkörper verteilt ist. Dies hat den Vorteil, dass der Katalysator über die gesamte Wandstärke des Filterkörpers wirken kann. Dadurch kann der Umsatz von NO in NO₂ erhöht werden. Dies hat den Vorteil, dass der Anteil der anfallenden Stickoxide, die über die schnelle SCR reduziert werden, erhöht wird.

Im Folgenden werden bevorzugte Ausführungsbeispiele der vorliegenden Erfindung anhand der nachfolgenden Figuren beschrieben. Es zeigen:
Figur 1: eine Schrägansicht eines erfindungsgemäßen Filterkerzenelements;
Figur 2: einen Querschnitt durch ein erfindungsgemäßes Filterkerzenelement;
Figur 3: eine Rasterelektronenmikroskop-Aufnahme der anorganischen Fasern mit angelagertem mineralischem Zusatzstoff;
Figur 4: eine Gerüststruktur von Zeolith (ZSM-5);
Figur 5: eine schematische Darstellung einer industriellen Filteranlage.

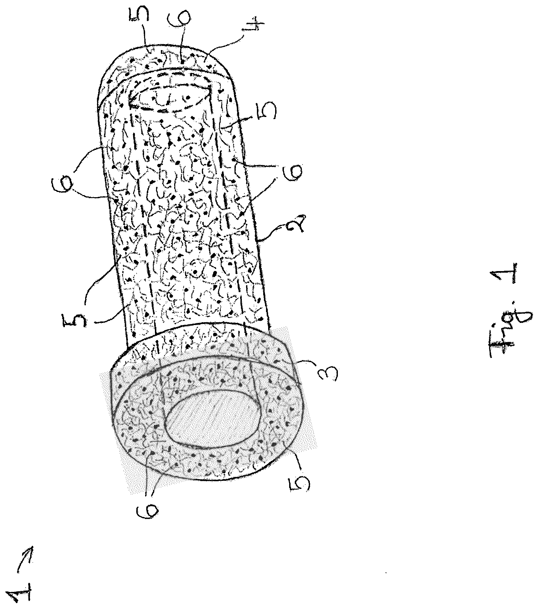

Figur 1 zeigt ein erfindungsgemäßes Filterkerzenelement 1, das anorganische Fasern 5 und einen mineralischen Zusatzstoff 6 umfasst. Das Filterkerzenelement 1 ist in Form eines Hohlkörpers ausgestaltet. Das gezeigte Filterkerzenelement 1 weist einen zentralen Bereich 2 auf. An das obere Ende des zentralen Bereichs 2 schließt ein Kragen 3 an. An das untere Ende des zentralen Bereichs 2 schließt ein Boden 4 an. Der gezeigte zentrale Bereich 2 ist in Form eines langen Hohlzylinders ausgestaltet. Der Kragen 3 weist ebenfalls die Form eines Hohlzylinders auf. Die Höhe dieses Hohlzylinders ist deutlich kleiner als die Länge des zentralen Bereichs 2. Des Weiteren ist zu erkennen, dass der Kragen 3 nach außen über den zentralen Bereich 2 übersteht. Die Innenseite des Kragens 3 schließt bündig mit der Innenseite des zentralen Bereichs 2 ab. Damit weist der Kragen 3 im Vergleich zum zentralen Bereich 2 eine größere Wanddicke auf. Das obere Ende des zentralen Bereichs 2 und der Kragen 3 bilden einen T-förmigen Kragenbereich. Die T-förmige Ausgestaltung des Kragenbereichs hat mehrere Vorteile. Zum einen kann das Filterkerzenelement 1 in die Kopfplatte einer Filteranlage eingesetzt werden. Durch die T-förmige Ausgestaltung des Kragenbereichs wird weiter erreicht, dass das Filterkerzenelement 1 gegen Biegemomente und Biegespannungen im Einspannbereich widerstandsfähiger ist. Der Boden 4 ist als Kugelkalotte ausgestaltet. Diese schließt sowohl innen als auch außen bündig mit dem zentralen Bereich 2 ab. Durch den Boden 4 ist das Filterkerzenelement 1 an seinem unteren Ende abgeschlossen. In einem bevorzugten Ausführungsbeispiel sind zentraler Bereich 2, Kragen 3 und Boden 4 des Filterkerzenelements 1 einstückig ausgestaltet. Dies hat den Vorteil, dass Rohgas nicht durch mögliche Übergänge zwischen den drei Bereichen 2, 3, 4 in das Innere des Filterkerzenelements 1 eindringen kann.

Das gezeigte Filterkerzenelement 1 umfasst anorganische Fasern 5, die einen Filterkörper aufbauen. Zweckmäßigerweise weist der Filterkörper eine poröse Struktur auf. An dem Filterkörper können Staubpartikeln, die im Rohgas enthalten sind, beim Durchgang durch das Filterkerzenelement 1 festgehalten und abgeschieden werden. Vorzugsweise handelt es sich bei den anorganischen Fasern 5 um mineralische Fasern, Hochtemperaturwollen, glasige Fasern oder Kohlenstofffasern.

Zusätzlich zu dem Filterkörper umfasst das gezeigte Filterkerzenelement 1 einen mineralischen Zusatzstoff 6. Offenbart sind Quarzsand, Gesteinsmehl, oder Kalk. Erfindungsgemäß ist der mineralische Zusatzstoff Zeolith 6 an die anorganischen Fasern 5 angelagert. Durch diese Anlagerung kommt es zu einer Versteifung der Fasermatrix, in der die anorganischen Fasern 5 angeordnet sind. Dies hat den Vorteil, dass die Festigkeit und Druckstabilität des Filterkörpers erhöht werden. Insbesondere werden die radiale Druckstabilität des Filterkörpers und das Biegemoment des Filterkörpers in Längsrichtung erhöht. In einem weiteren erfindungsgemäßen Ausführungsbeispiel ist es auch möglich, dass das Filterkerzenelement 1, zusätzlich zu dem aus anorganischen Fasern 5 aufgebauten Filterkörper und dem mineralischen Zusatzstoff 6, noch ein Verstärkungselement umfasst, das in den Filterkörper eingebettet ist. Das Verstärkungselement kann vorzugsweise aus einem Metallschaum, einem Lochblech, einem Drahtgitter oder einem Streckmetall ausgebildet sein. Ein zusätzliches Verstärkungselement kann zur weiteren Erhöhung der Stabilität des Filterkerzenelements 1 beitragen.

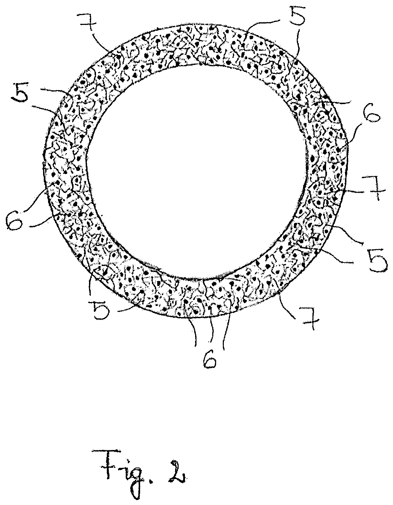

Figur 2 zeigt einen Querschnitt durch das erfindungsgemäße Filterkerzenelement 1 aus Figur 1. Dabei kann es sich um einen Querschnitt durch den zentralen Bereich 2, aber auch durch den Kragen 3 oder den Boden 4 handeln. Der Querschnitt weist die Form eines Kreisrings auf. Weiter sind die anorganischen Fasern 5 zu sehen. Diese liegen zum Teil übereinander, zum Teil sind sie miteinander verflochten. Das dreidimensionale Flechtwerk, das die anorganischen Fasern 5 als Verstrebungen und die gezeigten Hohlräume 7 umfasst, stellt die sog. Fasermatrix dar. Die Fasermatrix baut die poröse Struktur des Filterkörpers auf. Des Weiteren ist der feinteilige mineralische Zusatzstoff 6 zu sehen. Dieser ist gleichmäßig über die Fasermatrix verteilt. Beispielsweise kann der mineralische Zusatzstoff 6 in Pulverform vorliegen. In Figur 2 sind dann einzelne Pulverteilchen gezeigt. Darüber hinaus ist zu sehen, dass der mineralische Zusatzstoff 6 einen Teil der Hohlräume 7 der Fasermatrix auffüllt. Dadurch wird der Filterkörper zusätzlich versteift.

Die Zuschlagsmenge an mineralischem Zusatzstoff 6 bestimmt die Erhöhung der Stabilität des Filterkörpers. Es ist zweckmäßig, wenn das Gewicht des mineralischen Zusatzstoffes 6 im Filterkerzenelement 1 etwa 1 % bis 8 % des Gewichts des Filterkörpers ausmacht. Das heißt, die Gewichtsanteile des mineralischen Zusatzstoffes 6, einerseits, und jene der anorganischen Fasern 5, andererseits, liegen im Filterkerzenelement 1 vorzugsweise in Verhältnissen 0.01 : 1 bis 0.08 : 1 vor. Besonders bevorzugt macht das Gewicht des mineralischen Zusatzstoffes 6 im Filterkerzenelement 1 etwa 2 % bis 6 % des Gewichts des Filterkörpers aus. Die gewählten Bereiche der Zuschlagsmengen sind so gewählt, dass einerseits eine signifikante Erhöhung der Stabilität des Filterkörpers, vorzugsweise seiner radialen Druckstabilität und seines Biegemoments in Längsrichtung, bemerkbar ist. Andererseits erfüllt die Begrenzung der Zuschlagsmenge an mineralischem Zusatzstoff 6 den Zweck, Nachteile beim Druckverlustverhalten des Filterkerzenelements 1 möglichst gering zu halten. Der Zusatz des mineralischen Zusatzstoffes 6 reduziert grundsätzlich die Porosität und die Luftdurchlässigkeit des Filterkerzenelements 1. Für das erfindungsgemäße Filterkerzenelement 1 ist eine Porosität von mindestens 80 % vorteilhaft. Diese wird für die genannten Zuschlagsmengen erreicht. Geringere Porositäten würden einen merklich erhöhten Druckverlust zur Folge haben. Die Begrenzung der Zuschlagsmenge des mineralischen Zusatzstoffes 6 auf die genannten Bereiche hat darüber hinaus den Vorteil, dass die Gewichtszunahme des Filterkerzenelements 1 aufgrund der höheren Dichte begrenzt ist. Damit muss weniger Mehrgewicht von der Kopfplatte der Filteranlage getragen werden.

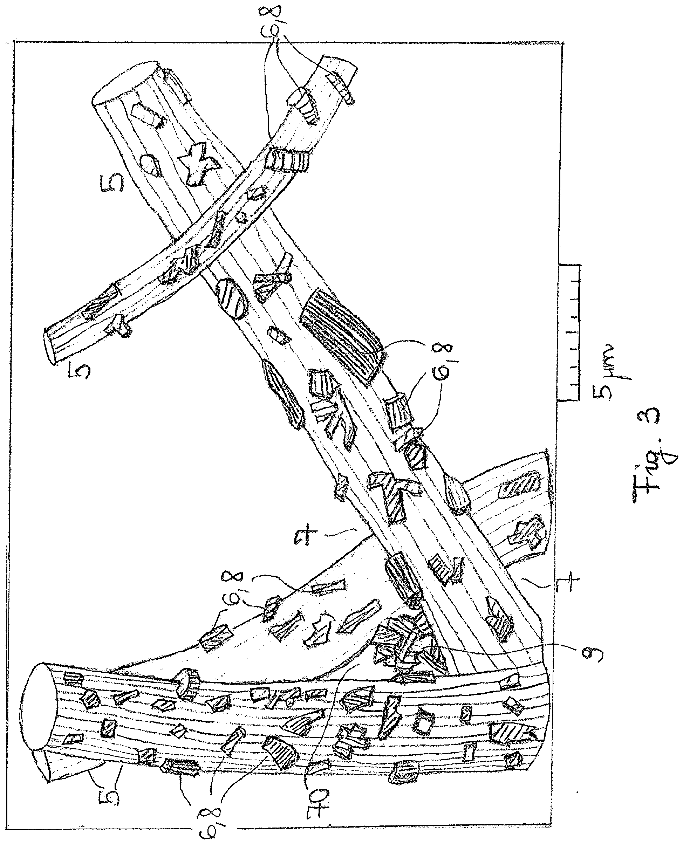

Figur 3 zeigt eine Rasterelektronenmikroskop-Aufnahme von anorganischen Fasern 5 in einem erfindungsgemäßen Filterkerzenelement 1. Die Aufnahme zeigt beispielhaft einen Ausschnitt aus der Fasermatrix. An die anorganischen Fasern 5 ist der mineralische Zusatzstoff 6 angelagert. In dem gezeigten Ausschnitt sind vier anorganische Fasern 5 zu sehen. Die gezeigten Fasern weisen unterschiedliche Dicken auf. Die Fasern 5 liegen zum Teil übereinander. Weiter sind mehrere Hohlräume 7, 70 zu sehen. Die Fasern 5 und die Hohlräume 7, 70 bauen das poröse Flechtwerk (Fasermatrix) des Filterkörpers auf, wie bereits im Zusammenhang mit Figur 2 beschrieben. An die Fasern 5 sind unterschiedlich große Fragmente 8 aus mineralischem Zusatzstoff 6 angelagert. In einem Hohlraum 70 ist eine Ablagerung 9 von mehreren Fragmenten 8 aus mineralischem Zusatzstoff 6 zu sehen. Der Hohlraum 70 wird von drei übereinander liegenden Fasern 5 gebildet. Die Fragmente 8 weisen unterschiedliche Formen auf. Dargestellt sind beispielsweise Fragmente 8 in Form von Plättchen und Stäbchen mit unterschiedlichen Ausmaßen. Schließlich ist Figur 3 mit einem Maßstab versehen. Die Dicke der Fasern 5 liegt im Bereich weniger Mikrometer. Die Ausmaße der Fragmente 8 liegen im Bereich einiger Zehntel-Mikrometer bis weniger Mikrometer. Die Länge der Fasern 5 liegt im Bereich zwischen 50 Mikrometern und 1 Millimeter.

Aus Figur 3 ist ersichtlich, dass die Fragmente 8 gleichmäßig an die Fasern 5 angelagert sind. Der Begriff "gleichmäßig" umfasst in diesem Zusammenhang auch die zufällige Verteilung einer Vielzahl von Fragmenten 8 unterschiedlicher Größe und Form auf der Oberfläche der Fasern 5. Dies führt zu einer Versteifung der Fasermatrix. Dadurch wird die Stabilität jeder einzelnen Faser 4 und damit auch die Stabilität des Filterkörpers erhöht. Die Fragmente 8 können beispielsweise den Pulverteilchen eines in Pulverform vorliegenden mineralischen Zusatzstoffes 6 entsprechen. Vorzugsweise an Stellen, an denen Fasern 5 unmittelbar übereinander liegen oder sich berühren, können sich an die an die Fasern 5 bereits angelagerten Fragmente 8 weitere Fragmente 8 anlagern. Dadurch entstehen Ablagerungen 9 von Fragmenten 8. Diese Ablagerungen 9 ragen in die Hohlräume 7, 70 der dreidimensionalen Fasermatrix hinein. Dadurch füllen sie einen Teil der Hohlräume 7, 70 auf. Dies führt zusätzlich zu einer Versteifung des Filterkörpers.

Nach der Erfindung, umfasst der mineralische Zusatzstoff 6 Zeolith. Zeolithe sind kristalline Gerüstsilikate.

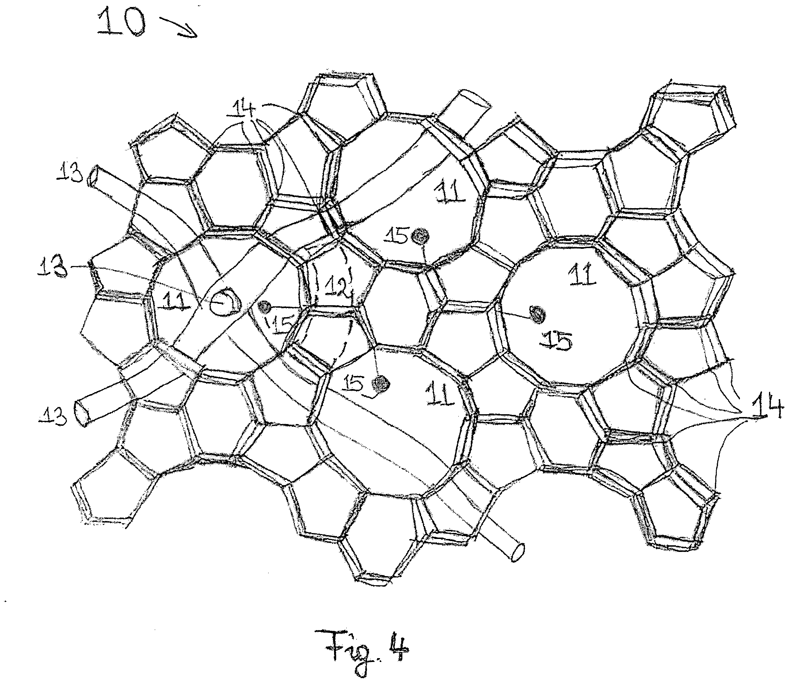

Figur 4 zeigt die Gerüststruktur 10 eines Zeolithen. Diese weist charakteristische gleichförmige Poren 11, Käfige 12 und Kanäle 13 auf. In dem gezeigten Beispiel weisen die Poren 11 eine zehneckige Struktur auf. Aufgrund dieser Struktur besitzen die Poren 11 einen deutlich größeren Durchmesser als die gezeigten fünf- und sechseckigen Strukturen. Aus den fünf- und sechseckigen Strukturen sind zum Teil Käfige 12 ausgebildet. Ein Käfig 12 kann sich beispielsweise, wie in Figur 4 durch die gestrichelte Linie angedeutet, über mehrere fünf- und/oder sechseckige Strukturen erstrecken. Darüber hinaus ist der Verlauf der Kanäle 13 angedeutet. Schließlich sind Kationen 15 gezeigt. Diese gewährleisten die elektrische Ladungsneutralität des Zeolithen.

Das Zustandekommen der Gerüststruktur 10 wird im Folgenden näher erläutert. Die chemische Zusammensetzung der Zeolithe wird durch die folgende Summenformel beschrieben: Mⁿ⁺_{x/n} [(AlO₂)ₓ⁻ (SiO₂)_{y}] · w H₂O. Daraus geht hervor, dass Zeolithe aus SiO₄- bzw. AlO₄-Tetraedern aufgebaut sind. Damit sind Zeolithe Alumosilikate. Diese Tetraeder sind über alle vier Sauerstoffatome miteinander verknüpft. An jeder Ecke 14 der in Figur 4 gezeigten Vielecke befindet sich eines dieser Tetraeder. Dadurch entsteht eine mikroporöse Gerüststruktur 10. Zeolithe gehören damit zu der Stoffklasse der Gerüstsilikate. Je nach Zeolith-Typ entsteht eine charakteristische Struktur aus Poren 11, Käfigen 12 und/oder Kanälen 13. Aufgrund des Aluminiumgehalts weisen Zeolithe eine negative Gerüstladung auf. Diese negative Ladung wird durch Kationen (Mⁿ⁺) 15 ausgeglichen. Diese können in den definierten Poren 11, Käfigen 12 und/oder Kanälen 13 der Gerüststruktur 10 eingeschlossen sein. In natürlich vorkommenden Zeolithen sind dies Kationen 15 der Metalle der 1. und 2. Hauptgruppe.

Je nachdem, wie die Kanäle 13 untereinander verbunden sind, werden Zeolithe in drei Gruppen unterteilt: Zeolithe mit einem eindimensionalen Kanalsystem, die durch nicht untereinander verbundene Kanäle 13 charakterisiert sind; Zeolithe mit einem zweidimensionalen Kanalsystem, die dadurch charakterisiert sind, dass die Kanäle 13 untereinander zu einem schichtförmigen System verbunden sind; Zeolithe mit einem dreidimensionalen Kanalsystem. Vorzugsweise kommen bei der vorliegenden Erfindung aus der ersten Gruppe Zeolithe vom Mordenit-(MOR-)Typ und vom Linde-Type-L-(LTL-)Typ zum Einsatz; aus der zweiten Gruppe kommen Zeolithe vom Brewsterit-(BRE-)Typ zum Einsatz; aus der dritten Gruppe kommen Zeolithe vom Beta-(BEA-)Typ, Pentasil-(MFI-)Typ, LiLSX-(FAU-)Typ, Chabasit-(CHA-)Typ, Erionit-(ERI-)Typ zum Einsatz.

Die in Figur 4 gezeigte Gerüststruktur 10 entspricht einem Zeolithen des MFI-Typs (ZSM-5-Typ). Der gezeigte Zeolith gehört also zur Gruppe der Zeolithe mit einem dreidimensionalen Kanalsystem. Wie in Figur 4 angedeutet, ist das System von Poren 11 durch lineare Kanäle 13 und kreuzende, abgewinkelte Kanäle 13 verbunden.

Über die Kanäle 13 des Zeolithen können die Kationen 15 durch Metalle, Metallverbindungen oder Edelmetallverbindungen ersetzt werden. Dies geschieht beispielsweise durch lonenaustausch oder chemische Behandlung. Vorzugsweise findet eine Dotierung mit Kupfer, Kobalt oder Eisen, mit Kuper-, Kobalt- oder Eisenverbindungen, oder mit Edelmetallverbindungen statt. Die genannten Stoffe und/oder Verbindungen werden in den Poren 11 und/oder Käfigen 12 festgehalten oder auch eingelagert. Durch diese Dotierung kann der Zeolith eine katalytisch aktive Komponente umfassen. Dies hat den Vorteil, dass das erfindungsgemäße Filterkerzenelement 1 zur katalytischen Entstickung des Rohgases verwendet werden kann. Damit kann nicht nur der Effekt der erhöhten Festigkeit erreicht werden, sondern auch eine katalytische Funktion in das Filterkerzenelement 1 integriert werden. Die katalytisch aktiven Zentren sind dann in dem Filterkerzenelement 1 immobilisiert. Ein Vorteil besteht darin, dass der Eintrag des Katalysators in einem Arbeitsgang mit dem Herstellungsprozess des Filterkerzenelements 1 erfolgen kann. Die Eigenschaft von Zeolith, andere Verbindungen in seiner Gerüststruktur 10 aufnehmen zu können, bleibt selbst bei Temperaturen von 600 °C unbeeinträchtigt erhalten. Dadurch ist eine Nutzung von Zeolith als Träger von katalytisch aktiven Komponenten auch bei erhöhter Dauerbetriebstemperatur uneingeschränkt möglich.

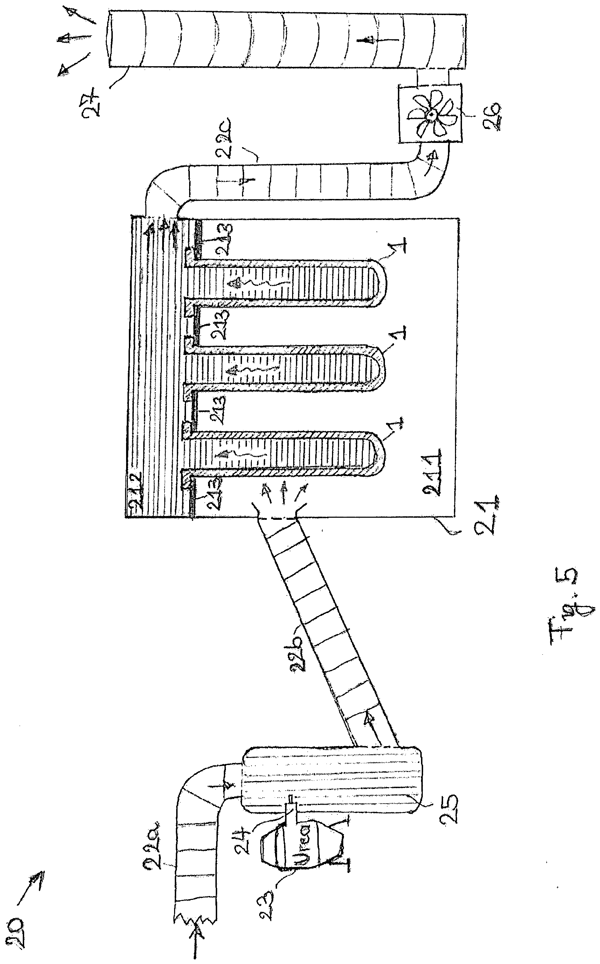

Figur 5 zeigt eine schematische Darstellung einer industriellen Filteranlage 20 zur Entstickung industrieller Gase. Gezeigt sind ein Filterhaus 21, mehrere Rohrleitungen 22a, 22b, 22c, ein Harnstofftank 23 mit Düse 24, ein Mischturm 25, ein Ventilator 26 und ein Schlot 27. Im unteren Teil des dargestellten Filterhauses 21 befindet sich die Rohgasseite 211. Dort ist eine Mehrzahl von erfindungsgemäßen Filterkerzenelementen 1 angeordnet. In dem oberen Teil des Filterhauses 21 befindet sich die Reingasseite 212, die von der Rohgasseite 211 isoliert ist.

Das Rohgas gelangt über die Rohrleitung 22a zunächst in den Mischturm 25. Dort wird über eine Düse 24 Harnstoff-Lösung aus dem Harnstofftank 23 eingedüst. Zweckmäßigerweise enthält die Lösung 30 % bis 35 %, vorzugsweise 32,5 % Harnstoff (Urea, CH₄N₂O). Wie dargestellt, ist der Querschnitt des Mischturms 25 deutlich größer als der Querschnitt der Rohrleitungen 22a oder 22b. Diese Querschnittsvergrößerung ist notwendig, damit eine hinreichend starke Durchmischung des Rohgases mit der Harnstoff-Lösung erfolgen kann. Das Gemisch wird dann über die Rohrleitung 22b in die Rohgasseite 211 des Filterhauses 21 eingeleitet. Die Länge der Leitung 22b ist derart gewählt, dass eine weitere Durchmischung des Rohgases und der Harnstoff-Lösung erfolgen kann. Zweckmäßigerweise können dazu auch zusätzliche Mischwerke in die Filteranlage eingebaut werden. Der Einsatz einer Harnstoff-Lösung hat den Vorteil, dass Harnstoff, im Gegensatz zu Ammoniak, nicht korrosiv und nicht toxisch ist. Der zur Entstickung benötigte Ammoniak entsteht durch Hydrolyse der Harnstoff-Lösung.

In der Rohgasseite 211 des Filterhauses 21 befindet sich eine Mehrzahl von erfindungsgemäßen Filterkerzenelementen 1. Das Filterkerzenelemente 1 kommt mit Zeolith zum Einsatz. Besonders bevorzugt wird Zeolith verwendet, der mit einer katalytisch aktiven Komponente dotiert ist. Die Filterkerzenelemente 1 sind mit ihrem Kragen 3 in die Kopfplatte 213 des Filterhauses 21 eingespannt.

Durch den Ventilator 26 wird in der Reingasseite 212 des Filterhauses 21 ein Unterdruck zwischen 0,010 bar und 0,050 bar, zweckmäßigerweise zwischen 0,012 bar und 0,020 bar erzeugt. Durch den Druckgradienten zwischen der Rohgasseite 211 und der Reingasseite 212 wird das Gemisch aus Rohgas und eingedüster Harnstoff-Lösung durch das Filterkerzenelement 1 gesaugt. Dabei wird das Rohgas am Filterkörper entstaubt. Darüber hinaus wird das Rohgas durch selektive katalytische Reduktion (SCR) entstickt. Als Katalysator für die SCR kommt erfindungsgemäß bevorzugt Zeolith zum Einsatz. Besonders bevorzugt ist der Zeolith seinerseits mit einer katalytisch aktiven Komponente dotiert. Die katalytisch aktive Komponente kann eine vorteilhafte Oxidation von Stickstoffmonoxid (NO) zu Stickstoffdioxid (NO₂) bewirken. Nachdem ein signifikanter Teil, zweckmäßigerweise etwa die Hälfte, von NO zu NO₂ oxidiert ist, kann die Entstickung über die sog. schnelle katalytische Reduktion ("fast SCR") ablaufen. Dabei werden NO und NO₂ unter Einsatz von aus der Harnstoff-Lösung gewonnenem Ammoniak (NH₃) bei Anwesenheit des Zeolithen als Katalysator zu molekularem Stickstoff (N2) und Wasser (H₂O) reduziert. Die letztgenannte Reduktion läuft bevorzugt über die Gerüststruktur 10 des Zeolithen ab. Die durch den katalytisch dotierten Zeolithen begünstigte schnelle katalytische Reduktion läuft um etwa eine Größenordnung schneller ab als die NO₂-arme SCR. Zweckmäßigerweise hat das Rohgas in der Rohgasseite 211 eine Temperatur zwischen 300 °C und 600 °C, bevorzugt zwischen 350 °C und 450 °C.

Das entstaubte und entstickte Gas wird schließlich mithilfe des vom Ventilator 26 erzeugten Unterdrucks weiter durch die Rohrleitung 22c zum Schlot 27 befördert. Schließlich wird das entstaubte und entstickte Gas über den Schlot 27 ausgeschieden.

### Liste der Bezugszeichen

- 1: Filterkerzenelement
- 2: zentraler Bereich
- 3: Kragen
- 4: Boden
- 5: anorganische Fasern
- 6: mineralischer Zusatzstoff
- 7: Hohlraum
- 70: Hohlraum mit Ablagerung 9
- 8: Fragmente
- 9: Ablagerung von Fragmenten 8
- 10: Gerüststruktur eines Zeolithen
- 11: Poren des Zeolithen
- 12: Käfige des Zeolithen
- 13: Kanäle des Zeolithen
- 14: Ecken von Vielecken
- 15: Kationen
- 20: industrielle Filteranlage
- 21: Filterhaus
- 22a, b, c: Rohrleitungen
- 23: Harnstofftank
- 24: Düse
- 25: Mischturm
- 26: Ventilator
- 27: Schlot
- 211: Rohgasseite des Filterhauses 21
- 212: Reingasseite des Filterhauses 21
- 213: Kopfplatte

## Patentansprüche

1. Filterkerzenelement (1) zur Entstaubung industrieller Gase,
das einen Filterkörper umfasst, der aus anorganischen Fasern (5) aufgebaut ist, und
das einen mineralischen Zusatzstoff (6) umfasst, der an die anorganischen Fasern (5) angelagert ist,
wobei der mineralische Zusatzstoff (6) Zeolith umfasst.

2. Filterkerzenelement (1) nach Anspruch 1, wobei die anorganischen Fasern (5) in einer Fasermatrix angeordnet sind.

3. Filterkerzenelement (1) nach Anspruch 2, wobei der mineralische Zusatzstoff (6) gleichmäßig in der Fasermatrix verteilt ist.

4. Filterkerzenelement (1) nach einem der Ansprüche 1 bis 3, wobei der mineralische Zusatzstoff (6) ein Gewicht aufweist, das 1 % bis 8 % des Gewichts des Filterkörpers, vorzugsweise 2 % bis 6 % des Gewichts des Filterkörpers ausmacht.

5. Filterkerzenelement (1) nach einem der Ansprüche 1 bis 4, wobei der Zeolith mit einer katalytisch aktiven Komponente dotiert ist.

6. Filterkerzenelement (1) nach Anspruch 5, wobei die katalytisch aktive Komponente ein katalytisch aktives Metall oder eine katalytisch aktive Metallverbindung, bevorzugt Eisen oder Kupfer umfasst.

7. Verfahren zur Herstellung eines Filterkerzenelements (1) zur Entstaubung industrieller Gase, das folgende Schritte umfasst:
- Herstellung einer Slurry, die anorganische Fasern (5) und einen mineralischen Zusatzstoff (6) umfasst, wobei der mineralische Zusatzstoff (6) Zeolith umfasst;
- Ansaugen der Slurry auf einen Saugkern zur Formung des Filterkerzenelements (1);
- Trocknung des geformten Filterkerzenelements (1).

8. Verfahren zur Herstellung eines Filterkerzenelements (1) nach Anspruch 7, wobei die Herstellung der Slurry folgende Schritte umfasst:
- Dispersion der anorganischen Fasern (5) und des mineralischen Zusatzstoffes (6) in Pulverform in einem Wasserbad;
- Umwälzen der Slurry.

9. Verfahren zur Herstellung eines Filterkerzenelements (1) nach einem der Ansprüche 7 oder 8, wobei der Zeolith vor der Herstellung der Slurry mit einer katalytisch aktiven Komponente dotiert wurde.

## Claims

1. A filter candle element (1) for the dedusting of industrial gases, comprising a filter body which is composed of inorganic fibers (5), and comprising a mineral additive (6) which is accumulated to the inorganic fibers (5),
wherein the mineral additive (6) comprises zeolite.

2. The filter candle element (1) according to claim 1, wherein the inorganic fibers (5) are arranged in a fiber matrix.

3. The filter candle element (1) according to claim 2, wherein the mineral additive (6) is evenly distributed in the fiber matrix.

4. The filter candle element (1) according to any of claims 1 to 3, wherein the mineral additive (6) has a weight accounting for 1% to 8% of the weight of the filter body, preferably 2% to 6% of the weight of the filter body.

5. The filter candle element (1) according to any of claims 1 to 4, wherein the zeolite is doped with a catalytically active component.

6. The filter candle element (1) according to claim 5, wherein the catalytically active component comprises a catalytically active metal or a catalytically active metal compound, preferably iron or copper.

7. A method of manufacturing a filter candle element (1) for dedusting industrial gases, comprising the following steps:
- producing a slurry comprising inorganic fibers (5) and a mineral additive (6), wherein the mineral additive (6) comprises zeolite;
- sucking in the slurry onto a suction core to form the filter candle element (1);
- drying the formed filter candle element (1).

8. The method of manufacturing a filter candle element (1) according to claim 7, wherein the production of the slurry comprises the following steps:
- dispersion of the inorganic fibers (5) and the mineral additive (6) in powder form in a water bath;
- circulation of the slurry.

9. The method of manufacturing a filter candle element (1) according to any of claims 7 or 8, wherein the zeolite was doped with a catalytically active component prior to the production of the slurry.

## Revendications

1. Élément de bougie filtrante (1) pour dépoussiérer des gaz industriels,
comprenant un corps filtrant qui est constitué de fibres inorganiques (5) et
comprenant un additif minéral (6) lié aux fibres inorganiques (5),
l'additif minéral (6) comprenant une zéolite.

2. Élément de bougie filtrante (1) selon la revendication 1, dans lequel les fibres inorganiques (5) sont disposées en une matrice de fibres.

3. Élément de bougie filtrante (1) selon la revendication 2, dans lequel l'additif minéral (6) est réparti uniformément dans la matrice de fibres.

4. Élément de bougie filtrante (1) selon l'une des revendications 1 à 3, dans lequel l'additif minéral (6) présente un poids qui constitue de 1 % à 8 % du poids du corps filtrant, de préférence de 2 % à 6 % du poids du corps filtrant.

5. Élément de bougie filtrante (1) selon l'une des revendications 1 à 4, dans lequel la zéolite est dopée avec un composant catalytiquement actif.

6. Élément de bougie filtrante (1) selon la revendication 5, dans lequel le composant catalytiquement actif comprend un métal catalytiquement actif ou un composé métallique catalytiquement actif, de préférence du fer ou du cuivre.

7. Procédé de fabrication d'un élément de bougie filtrante (1) pour dépoussiérer des gaz industriels, comprenant les étapes consistant à :
- préparer une suspension qui comprend des fibres inorganiques (5) et un additif minéral (6), l'additif minéral (6) comprenant une zéolite ;
- aspirer la suspension sur un noyau aspirant pour former l'élément de bougie filtrante (1) ;
- sécher l'élément de bougie filtrante formé (1).

8. Procédé de fabrication d'un élément de bougie filtrante (1) selon la revendication 7, dans lequel la préparation de la suspension comprend les étapes consistant à :
- disperser les fibres inorganiques (5) et l'additif minéral (6) sous forme de poudre dans un bain d'eau ;
- faire circuler la suspension.

9. Procédé de fabrication d'un élément de bougie filtrante (1) selon l'une des revendications 7 ou 8, dans lequel la zéolite a été dopée avec un composant catalytiquement actif avant la préparation de la suspension.
